# EUROPEAN PATENT SPECIFICATION

(11) **EP 2 015 515 B1**
(45) Date of publication and mention of the grant of the patent: **01.03.2017**
(21) Application number: 08157744.7
(22) Date of filing: 06.06.2008
(51) Int. Cl.: H04L 12/28

(54) **METHOD AND APPARATUS FOR ERROR MESSAGING IN A MULTIMEDIA NETWORK**
VERFAHREN UND VORRICHTUNG ZUR FEHLERMELDUNG IN EINEM MULTIMEDIA-NETZWERK
PROCÉDÉ ET APPAREIL POUR GÉNÉRER DES MESSAGES D'ERREUR DANS UN RÉSEAU MULTIMÉDIA

(30) Priority: 07.06.2007 EP 07301091
(43) Date of publication of application: 14.01.2009
(73) Proprietor: Thomson Licensing, 92130 Issy-les-Moulineaux (FR)
(72) Inventor: Henry, Jean-Baptiste, 35520, Melesse (FR); Seingier, François-Xavier, 35700, Rennes (FR)
(74) Representative: Huchet, Anne

(56) References cited:
- WO-A-00/67135
- WO-A-03/085892
- WO-A1-00/02337
- NeutralizeR: "Hotlink Protection Tutorial (Apache Server - .htaccess files)", Internet Article, 25 July 2006 (2006-07-25), 1 October 2006 (2006-10-01), pages 1-7, Internet Retrieved from the Internet: URL:http://www.vbulletin.org/forum/showthr ead.php?t=122057 [retrieved on 2013-08-20]

## Description

### FIELD OF THE INVENTION

The present invention is generally directed to digital content distribution, and in particular to error reporting in digital content distribution networks.

### BACKGROUND OF THE INVENTION

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

The prior art teaches many systems for service delivery, such as for example those described in WO 03/085892 and WO 00/67135. In these systems, a device may notify a user of non-delivery of a service through dedicated error messages. However, as will be seen, there are systems that do not have such messages, in which case these solutions may not be used for such a notification.

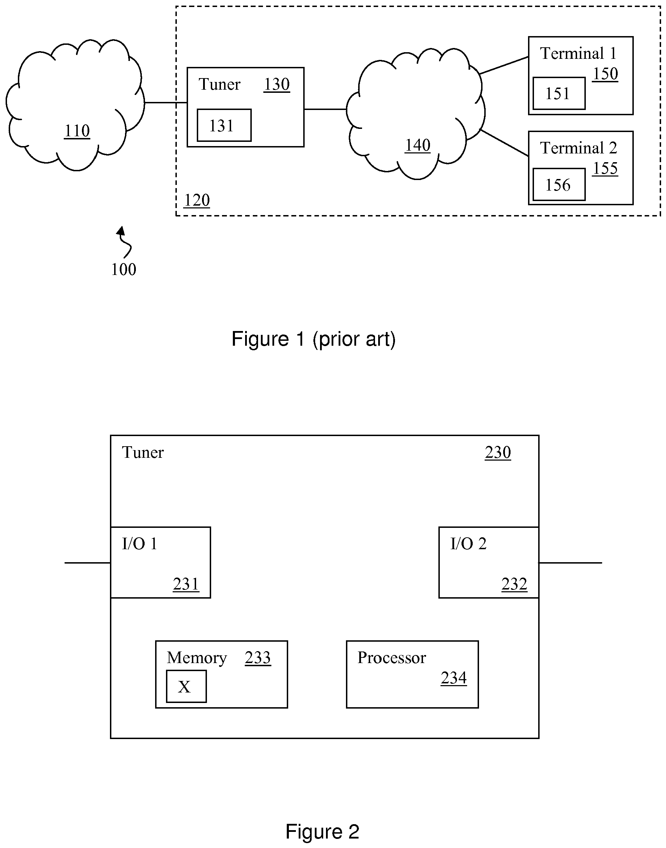

Figure 1 illustrates an exemplary prior art network that will help present a problem solved by the present invention. The network 100 comprises an access network 110 and a home network 120. The access network 110, which may be based on any suitable technology such as for example broadcast satellite or broadband ADSL, is adapted to deliver content, such as broadcast television, to a plurality of home networks 120 (only one home network is shown in the Figure for reasons of clarity.)

The content delivered over the access network 110 to the home network 120 is received by a gateway device 130, hereinafter called "tuner". The tuner 130 is adapted to select at least one item of content and to deliver it over an internal network 140, that for example is Ethernet based, to at least one of a plurality of terminals 150, 155.

The tuner 130 works as a media server towards the terminals 150, 155 and is preferably adapted to provide a content service list to them, this service list providing a view on all the content accessible by the tuner 130. The terminals 150, 155 are able to retrieve or receive this list from a media server in the tuner.

Assume, for example, the first terminal 150 uses a SD&S (Service Description and Selection) protocol to select a service, such as a particular program, from the service list and to request the tuner 130 to deliver the service on the internal network 140. According to the protocol, the first terminal 150 comprises a RTP (Real Time Protocol) client 151, the tuner 130 comprises a RTP server 131, and the terminal 150 sends a IGMP (Internet Group Multicast Protocol) join request on the network, which multicast group address is corresponding to the service; the Multicast group address being indicated in the list. The tuner 130 then accesses the service via the access network 110. Depending on the technology used in the access network 110, the access may for example be established by locking to the right frequency or by joining the right multicast group. Once the service has been accessed, the tuner 130 sends the service over the internal network 140.

Assume then that the second terminal 155 requests another service, using its RTP client 156 in a similar manner. If this second service is compatible with the first service - i.e. it may be accessed from the access network 110 in parallel with the first service, which may be the case if the services for example share a frequency, or there is enough bandwidth left to retrieve the service and send it over the internal network 140 - then the second service will be delivered to the second terminal 155.

However, the second service may also be incompatible with the first service, e.g. if they do not share a frequency or if sufficient bandwidth is lacking.

In this case it is not possible to deliver both services and the tuner 130 is left with a choice: either it refuses the request or it accepts the request at the cost of stopping the delivery of the first service to the first terminal 150. In both cases, a terminal will be left in the dark as to what happened, since the protocol does not provide any error messages.

WO00/02337 discloses a system for bandwidth reservation in a network, more specifically designed for 1394 technology. In case of conflict for a resource, messages are exchanged between the resource manager RM and the controllers C1, C2 requesting access to the resource, conflicts are arbitrated and controllers informed by messages of the pre-emption. Then a user feedback, designed as a pop-up on the controllers C1 C2, is generated by the respective controllers. However, in case where such pre-emption messages are not available, a method for informing a user of a service interruption in case a service can not be served is desirable.

It will be appreciated that users would benefit from a solution to this problem. At present, though, no such solutions exist and it is an object of the present invention to provide a solution that enables users be alerted for example when service delivery is impossible for any of the reasons detailed hereinbefore.

### SUMMARY OF THE INVENTION

The invention is now defined by the independent method claim 1 and the independent apparatus claim 2.

### BRIEF DESCRIPTION OF THE DRAWINGS

Preferred features of the present invention will now be described, by way of example, with reference to the accompanying drawings, in which: Figure 1, already described hereinbefore, illustrates a prior art network; and Figure 2 illustrates an apparatus according to a preferred embodiment of the present invention.

### DETAILED DESCRIPTION OF PREFERRED EMBODIMENTS

Figure 2 illustrates an apparatus according to a preferred example of the present invention. Figure 2 only illustrates the apparatus itself, while the objects of Figure 1 that are outside the apparatus are not shown, but the same reference numbers will be used for convenience. Furthermore, internal connections are left out of the Figure for the sake of clarity.

The apparatus, in the present example a tuner 230, comprises at least a first interface (I/O 1) 231 for communication with an access network 110 and a second interface (I/O 2) 232 for communication with terminals 150, 155 over an internal network 140. The tuner 230 further comprises at least one memory (hereinafter "memory") 233 and at least one processor (hereinafter "processor") 234 adapted to respond to requests from the terminals 150, 155.

Assume now that the terminals 150, 155 request services from the tuner 230 in the same order as that described hereinbefore, i.e. the first terminal 150 requests a first service after which the second terminal 155 requests a second service. The processor 234 preferably performs the functions of the media server 131 depicted in Figure 1, and the latter is for that reason not shown.

As already mentioned, if the two services are compatible, then the processor 234 will provide each terminal 150, 155 with the requested service. The present invention is used if the two services are incompatible. As previously remarked, the prior art tuner 130 has the choice between either stopping the first service to deliver the second service (without notifying the first terminal 150) or continuing the first service without delivering the second service (without notifying the second terminal 155). The inventive tuner 230, however, overcomes this problem of the prior art in that the processor 234 either retrieves an image X from the memory 233 or creates an image Y (not shown), for example by superposition or insertion of relevant words on a white background, in order to send it to the relevant terminal.

If, for example, the processor 234 is programmed to interrupt the first service to deliver the second service, then it sends the retrieved or created image to the first terminal 150 that then, in a sense believing it is part of the service, displays the image to the user. It is advantageous that the image in this case states something along the lines of: "The service has been interrupted to deliver a service to another terminal." In case the network 100 comprises a plurality of terminals to which the delivered service is interrupted, it is advantageous to send the image to all these terminals.

On the other hand, if the processor 234 is programmed to continue the first service and refuse the request for the second service, then it sends the retrieved or created image to the second terminal 155 that then, also in a sense believing that the service is delivered, displays the image to the user. In this case it is advantageous that the image in this case states words to the effect of: "The service cannot be delivered as a service is being delivered to another terminal."

As there is no need to access the access network 110 in order to retrieve an image and that the images may be made to consume very little bandwidth, the processor 234 is practically always able to send an image to a terminal.

The skilled person will appreciate that the invention for example allows error messaging in a network without dedicated messages in the protocol used for communication. This is due to the fact that the message masquerades as content that is delivered to a terminal.

The skilled person will also appreciate that the example is not limited to images, but that other means of communication, such as sound, may also be employed, possibly in conjunction with images.

It will be understood that the present invention has been described purely by way of example. Each feature disclosed in the description and (where appropriate) the claims and drawings may be provided independently or in any appropriate combination. Features described as being implemented in hardware may also be implemented in software, and vice versa. Connections may, where applicable, be implemented as wireless connections or wired, not necessarily direct or dedicated, connections.

## Claims

1. A method for delivering error information in a first network (120) comprising a tuner (230), a first device (155) and at least one second device (150), the method comprising, at the tuner (230), the steps of:
- receiving from the first device (155) a request for a first audiovisual service wherein said first audiovisual service is accessed by the tuner over a second network (110);
- receiving from the at least second device (150) a request for a second audiovisual service wherein said second audiovisual service is accessed by the tuner over said second network (110); and in case the first audiovisual service and the second audiovisual service are not compatible :
- in case the first audiovisual service is interrupted to deliver the second audiovisual service to the at least one second device (150), delivering an image to the first device (155), the image being such that it, when rendered to a user, provides to the user error information about the non-delivery of the first audivisual service; or
- in case the second audiovisual service is to be refused in order to deliver the first audiovisual service, delivering an image to the at least one second device (150), the image being such that it, when rendered to a user, provides to the user error information about the non-delivery of the second audiovisual service.

2. A tuner (230) adapted to be connected to a first network (120) further comprising a first device (155) and at least one second device (150), the tuner (230) comprising:
- an interface (232) adapted to receive from the first device (155) a request for a first audiovisual service on said first network wherein said first audiovisual service is accessed by the tuner over a second network (110); said interface (232) being adapted to receive from the second device (150) a request for a second audiovisual service on said first network wherein said second audiovisual service is accessed by the tuner over said second network (110);
- a second interface (231) adapted to be connected to said second network (110); and
- a processor (234) adapted to access the first audiovisual service and the second audiovisual service over the second network (110) and in case the first audiovisual service and the second audiovisual service are not compatible, the processor (234) being further adapted to:
deliver an image to the first device (155) in case the first audiovisual service is interrupted to deliver the second audiovisual service to the at least one second device (150), the image being such that it, when rendered to a user, provides to the user error information about the non-delivery of the first audiovisual service, or
deliver an image to the at least one second device (150) in case the second service is to be refused in order to deliver the first audiovisual service, the image being such that it, when rendered to a user, provides to the user error information about the non-delivery of the second audiovisual service.

## Patentansprüche

1. Verfahren zum Liefern von Fehlerinformationen in einem ersten Netz (120), das einen Tuner (230), eine erste Vorrichtung (155) und mindestens eine zweite Vorrichtung (150) umfasst, wobei das Verfahren bei dem Tuner (230) die folgenden Schritte umfasst:
- Empfangen einer Anforderung für einen ersten audiovisuellen Dienst von der ersten Vorrichtung (155), wobei auf den ersten audiovisuellen Dienst durch den Tuner über ein zweites Netz (110) zugegriffen wird;
- Empfangen einer Anforderung für einen zweiten audiovisuellen Dienst von der mindestens zweiten Vorrichtung (150), wobei auf den zweiten audiovisuellen Dienst durch den Tuner über das zweite Netz (110) zugegriffen wird; und falls der erste audiovisuelle Dienst und der zweite audiovisuelle Dienst nicht kompatibel sind:
- Liefern eines Bilds an die erste Vorrichtung (155), wobei das Bild derart ist, dass es dem Nutzer Fehlerinformationen über die Nichtlieferung des ersten audiovisuellen Dienstes bereitstellt, wenn es einem Nutzer gerendert wird, falls der erste audiovisuelle Dienst unterbrochen wird, um an die mindestens eine zweite Vorrichtung (150) den zweiten audiovisuellen Dienst zu liefern; oder
- Liefern eines Bilds an die mindestens eine zweite Vorrichtung (150), wobei das Bild derart ist, dass es dem Nutzer Fehlerinformationen über die Nichtlieferung des zweiten audiovisuellen Dienstes bereitstellt, wenn es einem Nutzer gerendert wird, falls der zweite audiovisuelle Dienst abgewiesen werden soll, um den ersten audiovisuellen Dienst zu liefern.

2. Tuner (230), der dafür ausgelegt ist, mit einem ersten Netz (120) verbunden zu werden, das ferner eine erste Vorrichtung (155) und mindestens eine zweite Vorrichtung (150) umfasst, wobei der Tuner (230) umfasst:
- eine Schnittstelle (232), die dafür ausgelegt ist, von der ersten Vorrichtung (155) eine Anforderung für einen ersten audiovisuellen Dienst in dem ersten Netz zu empfangen, wobei auf den ersten audiovisuellen Dienst durch den Tuner über ein zweites Netz (110) zugegriffen wird; wobei die Schnittstelle (232) dafür ausgelegt ist, von der zweiten Vorrichtung (150) eine Anforderung für einen zweiten audiovisuellen Dienst in dem ersten Netz zu empfangen, wobei auf den zweiten audiovisuellen Dienst durch den Tuner über das zweite Netz (110) zugegriffen wird;
- eine zweite Schnittstelle (231), die dafür ausgelegt ist, mit dem zweiten Netz (110) verbunden zu werden; und
- einen Prozessor (234), der dafür ausgelegt ist, über das zweite Netz (110) auf den ersten audiovisuellen Dienst und auf den zweiten audiovisuellen Dienst zuzugreifen, wobei der Prozessor (234), falls der erste audiovisuelle Dienst und der zweite audiovisuelle Dienst nicht kompatibel sind, ferner ausgelegt ist zum:
Liefern eines Bilds an die erste Vorrichtung (155), falls der erste audiovisuelle Dienst unterbrochen wird, um den zweiten audiovisuellen Dienst an die mindestens eine zweite Vorrichtung (150) zu liefern, wobei das Bild derart ist, dass es dem Nutzer Fehlerinformationen über die Nichtlieferung des ersten audiovisuellen Dienstes bereitstellt, wenn es einem Nutzer gerendert, oder
Liefern eines Bilds an die mindestens eine zweite Vorrichtung (150), falls der zweite Dienst abgewiesen werden soll, um den ersten audiovisuellen Dienst zu liefern, wobei das Bild derart ist, dass es dem Nutzer Fehlerinformationen über die Nichtlieferung des zweiten audiovisuellen Dienstes bereitstellt, wenn es einem Nutzer gerendert wird.

## Revendications

1. Procédé pour fournir des informations d'erreur dans un premier réseau (120) comprenant un syntoniseur (230), un premier dispositif (155) et au moins un deuxième dispositif (150), le procédé comprenant, au niveau du syntoniseur (230), les étapes suivantes :
- la réception à partir du premier dispositif (155) d'une demande pour un premier service audiovisuel dans laquelle le syntoniseur accède audit premier service audiovisuel sur un deuxième réseau (110) ;
- la réception à partir du au moins un deuxième dispositif (150) d'une demande pour un deuxième service audiovisuel dans laquelle le syntoniseur accède audit deuxième service audiovisuel sur ledit deuxième réseau (110) ; et si le premier service audiovisuel et le deuxième service audiovisuel ne sont pas compatibles :
- si le premier service audiovisuel est interrompu pour fournir le deuxième service audiovisuel au au moins un deuxième dispositif (150), la fourniture d'une image au premier dispositif (155), l'image étant telle que, lors de son rendu pour un utilisateur, elle fournit à l'utilisateur des informations d'erreur sur la non-fourniture du premier service audiovisuel ; ou
- si le deuxième service audiovisuel doit être refusé pour fournir le premier service audiovisuel, la fourniture d'une image au au moins un deuxième dispositif (150), l'image étant telle que, lors de son rendu pour un utilisateur, elle fournit à l'utilisateur des informations d'erreur sur la non-fourniture du deuxième service audiovisuel.

2. Syntoniseur (230) adapté pour être connecté à un premier réseau (120) comprenant en outre un premier dispositif (155) et au moins un deuxième dispositif (150), le syntoniseur (230) comprenant :
- une interface (232) adaptée pour recevoir à partir du premier dispositif (155) une demande pour un premier service audiovisuel sur ledit premier réseau, où le syntoniseur accède audit premier service audiovisuel sur un deuxième réseau (110), ladite interface (232) étant adaptée pour recevoir à partir du deuxième dispositif (150) une demande pour un deuxième service audiovisuel sur ledit premier réseau, où le syntoniseur accède audit deuxième service audiovisuel sur ledit deuxième réseau (110) ;
- une deuxième interface (231) adaptée pour être connectée audit deuxième réseau (110) ; et
un processeur (234) adapté pour accéder au premier service audiovisuel et au deuxième service audiovisuel sur le deuxième réseau (110) et si le premier service audiovisuel et le deuxième service audiovisuel ne sont pas compatibles, le processeur (234) étant en outre adapté pour :
fournir une image au premier dispositif (155) si le premier service audiovisuel est interrompu pour fournir le deuxième service audiovisuel au au moins un deuxième dispositif (150), l'image étant telle que, lors de son rendu pour un utilisateur, elle fournit à l'utilisateur des informations d'erreur sur la non-fourniture du deuxième service audiovisuel, ou
fournir une image au au moins un deuxième dispositif (150) si le deuxième service doit être refusé pour fournir le premier service audiovisuel, l'image étant telle que, lors de son rendu pour un utilisateur, elle fournit à l'utilisateur des informations d'erreur sur la non-fourniture du deuxième service audiovisuel.
